# EUROPEAN PATENT APPLICATION

(11) **EP 4 786 915 A1**
(43) Date of publication of application: **05.08.2026**
(21) Application number: 26155021.4
(22) Date of filing: 29.01.2026
(51) Int. Cl.: G01B 7/14

(54) **ARTICULATED PROXIMITY MEASUREMENT**

(30) Priority: 29.01.2025 US 202519040667
(71) Applicant: RTX Corporation, Farmington, CT 06032 (US)
(72) Inventor: HACKETT, Bryan James, Berlin, 06037 (US)
(74) Representative: Dehns

(57) **Abstract**

An apparatus for detecting proximity within a gas turbine engine comprising a proximity probe (202) configured to monitor proximity between engine components within areas of the gas turbine engine. An articulated housing (108) contains the proximity probe. The articulated housing (108) enables the proximity probe to monitor the proximity between the engine components in a 360° range about the apparatus.

## Description

### TECHNICAL FIELD

This disclosure relates generally to a proximity measurements. More specifically, this disclosure relates to a probe for taking articulated proximity measurements.

### BACKGROUND

Proximity measurements within gas turbine engines can be useful in identifying relative motion of various components. End uses of proximity measurement devices include gapping verification, vibratory response monitoring and thermally driven response measurements, among others. In the current state-of-the-art, existing engine geometry needs to be designed around or modified to add a proximity probe. In either case, there may be a follow-on effect to parts included in the measurement of interest. Additionally, it is not always feasible to achieve a measurement at the location of interest via engine part modification so indirect measurements must be undertaken with suspect viability.

### SUMMARY

This disclosure relates to an apparatus for taking articulated proximity measurements.

In some aspects of the present invention, an apparatus for detecting proximity within a gas turbine engine includes a proximity probe configured to monitor proximity between engine components within areas of the gas turbine engine and an articulated housing containing the proximity probe, where the articulated housing enables the proximity probe to monitor the proximity between the engine components in a 360° range about the apparatus.

Any single one or any combination of the following features may be used with the examples above. The apparatus may include a fixed housing connected to an end of the articulated housing. The apparatus may include a probe head connected to an end of the articulated housing. The articulated housing further contains the optical probe and is configured to enable the optical probe to monitor the engine components in the 360° range about the apparatus. The apparatus may include a wire connection running through the articulated housing to carry signals to/from the proximity probe. The apparatus may include a controller configured to control movement of the articulated housing throughout the 360° range about the apparatus. The proximity probe further may include an eddy current probe configured to monitor the proximity between the engine components. The proximity probe further may include a capacitive probe configured to monitor the proximity between the engine components. The articulated housing is further configured to be locked into a fixed position.

In other aspects of the present invention, an apparatus for detecting proximity within a gas turbine engine includes a proximity probe configured to monitor proximity between engine components within areas of the gas turbine engine, an optical probe configured to optically monitor the engine components and an articulated housing containing the proximity probe and the optical probe, where the articulated housing enables the proximity probe to monitor the proximity between the engine components and the optical probe to optically monitor the engine components in a 360° range about the apparatus.

Any single one or any combination of the following features may be used with the examples above. The apparatus may include a fixed housing connected to a first end of the articulated housing. The apparatus may include a probe head connected to a second end of the articulated housing, the probe head defining an opening therein for the proximity probe and the optical probe. The apparatus may include a first wire connection running through the articulated housing to carry signals to/from the proximity probe, and a second wire connection running through the articulated housing to carry signals to/from the optical probe. The apparatus may include a controller configured to control movement of the articulated housing throughout the 360° range about the apparatus. The proximity probe further may include an eddy current probe configured to monitor the proximity between the engine components. The proximity probe further may include a capacitive probe configured to monitor the proximity between the engine components. The articulated housing is further configured to be locked into a fixed position.

In still other aspects of the present invention, a method for detecting proximity within a gas turbine engine. The method also includes monitoring proximity between engine components within areas of the gas turbine engine using a proximity probe, optically monitoring the engine components using an optical probe and articulating the proximity probe and the optical probe to a position to monitor proximity between the engine components and to optically monitor the engine components using an articulated housing containing the proximity probe and the optical probe, where the articulated housing enables the proximity probe to monitor the proximity between the engine components and to optically monitor the engine components in a 360° range.

Any single one or any combination of the following features may be used with the examples above. The method may include controlling movement of the articulated housing throughout the 360° range using a controller. The method may include locking the articulated housing into a fixed position to monitor proximity and optically monitor the engine components.

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts:
FIGURE 1 illustrates an articulated proximity measurement probe;
FIGURE 2 illustrates a cross-sectional view of the articulated proximity measurement probe;
FIGURE 3 illustrates a perspective end view of the articulated proximity measurement probe;
FIGURE 4 illustrates an end view of a first embodiment of the articulated proximity measurement probe; and
FIGURE 5 illustrates an end view of a second embodiment of the articulated proximity measurement probe.

### DETAILED DESCRIPTION

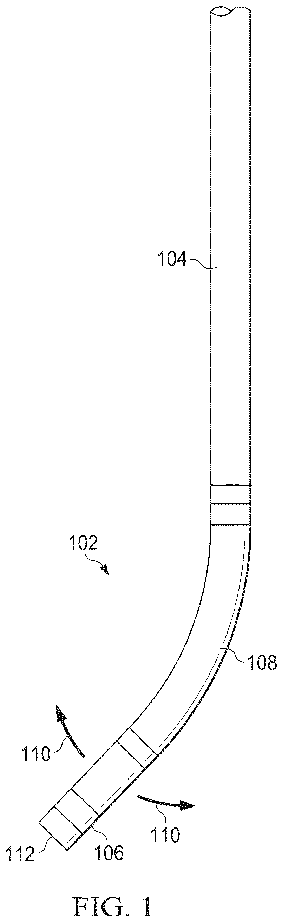

FIGURES 1 through 5, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

FIGURE 1 illustrates a side view of the articulated proximity probe 102. The articulated proximity probe 102 includes a fixed body portion 104 and a probe head 106 that are interconnected via an articulated body portion 108. The articulated body portion 108 enables the probe head 106 to be rotated in a 360° range about the fixed body portion 104. The articulated body portion 108 enables movement of the probe head 106 in left and right directions as indicated generally by arrows 110. The probe head 106 defines an open end 112 therein that enables probe measurements to be taken out of the open end 112. The articulated proximity probe 102 is configured to be inserted through a borehole port of a gas turbine engine in order to monitor proximities and take optical measurements from the open end 112 of the articulated proximity probe 102. The articulated proximity probe 102 provides measurements where direct line of sight is not possible from existing engine case ports and further modification of the engine hardware is not feasible.

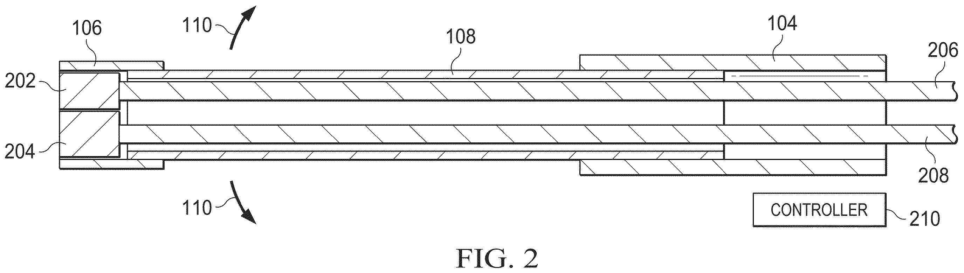

Referring now to FIGURE 2, there is illustrated a side cross-sectional view of the articulated proximity probe 102. The articulated proximity probe 102 integrates a proximity probe 202 with a borescope optical probe 204 in order to take relative motion measurements in otherwise inaccessible locations within the gas turbine engine. The proximity probe 202 may comprise an eddy current probe, capacitive probe, ultrasonic probe, PZT probe (lead zirconate titanate), thermal imaging probe, ping testing hammer or other proximity detection device. The eddy current or capacitive probes may detect eddy current proximity and capacitive proximity in order to determine proximate distances. An ultrasonic probe may provide for target sampling of mechanical, vapor ablation and chemicals using a deposition of thickness test to determine proximity. Eddy current probes may be used for inspecting for cracks.

Signals are transmitted to and from the proximity probe 202 via a wired connection 206. Optical signals are transmitted to and from the optical probe 204 via an optical connection 208. The wired connection 206 and optical connection 208 are contained within the articulated body portion 108 and fixed body portion 104. The wired connection 206 and optical connection 208 are comprised of a flexible material enabling their bending in the directions shown generally by the arrows 110 responsive to movement by the articulated body portion 108. The control of movement of the articulated body portion 108 is provided from a controller 210 that controls movement of the articulated body portion 108 in the directions indicated generally by the arrows 110. Movement of the articulated body portion 108 by the controller 210 may be carried out via a joystick or other type of user interface associated with the controller 210 to provide wired, wireless or mechanically actuated signal control to the articulated body portion 108. In other embodiments, the movement of the probe head 106 may be locked into a fixed position once the proper orientation of the probe head is achieved and measurements are then taken from the probe head locked in a fixed position. While the present embodiment describes the inclusion of the optical probe 204 along with the proximity probe 202, it will be appreciated that the proximity probe 202 could be implemented alone within the articulated proximity probe 102 without the need for the optical probe 204.

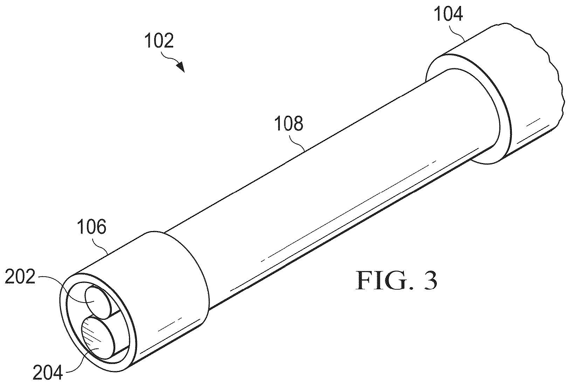

Referring now to FIGURE 3, there is illustrated an end view of the articulated proximity probe 102. This provides a view of the opening defined within the end of the probe head 106. Through this opening the articulated proximity probe 202 and optical probe 204 may take measurements/data from portions of the gas turbine engine visible to the probe head 106 of the articulated proximity probe 102. Below the probe head 106 are the articulated body portion 108 and fixed body portion 104.

A number of benefits are provided by the articulated proximity probe 102 implementing both optical probe 204 and proximity probe 202 or a proximity probe 202 by itself. The articulated proximity probe 102 allows proximity measurements to be taken at locations that would otherwise be inaccessible by inserting the articulated proximity probe 102 into for example gas turbine engine borescope ports. The movable probe head 106 allows for flexibility in sensor orientation. Thus, multiple measurements are possible via one probe assembly in a 360° range around the location in which the articulated proximity probe 102 is inserted. Finally, the integral optical probe 204 may comprise, for example, a camera that allows for real-time optical inspection incapabilities within the articulated proximity probe 102.

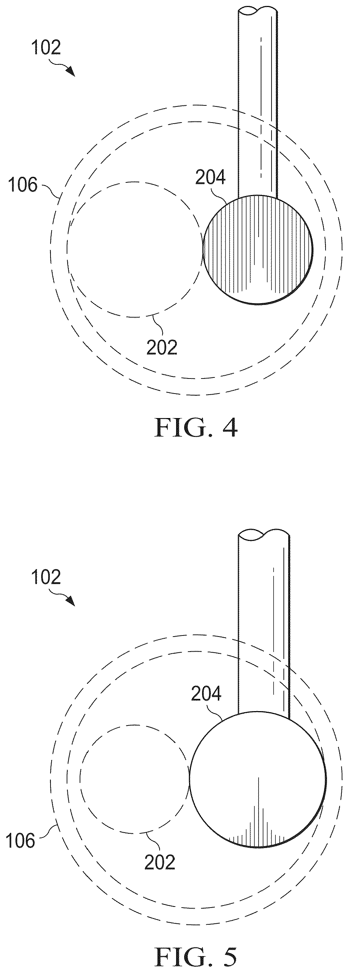

Referring now to FIGURES 4 and 5, there are illustrated various packaging options for the articulated proximity probe 102. By utilizing existing optics and arranging the sensor probes side-by-side, the overall diameter of the assembly may be scaled. For example, as shown in FIGURE 4, the optical probe 204 may have a diameter of approximately 4 mm while the proximity probe 202 may have a diameter of .1875 inches (4.763 mm). The probe head 106 diameter may be .375 inches (9.53 mm) in order to accommodate both the proximity probe 202 and optical probe 204.

In the example illustrated in FIGURE 5, the optical probe 204 still has a 4 mm diameter while the proximity probe 202 has a diameter of 3 mm. The probe head 106 diameter will then be .300 inches (7.62 mm) on the probe head. The articulated proximity probe 102 components may be scaled to reduce the overall package size. The fidelity/resolution achievable with existing optics are likely not required in the combined probe. The custom proximity probe 202 and custom optical probe 204 may be designed to optimize overall package geometry. The custom probe head 106 is required to incorporate proximate measurements.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. An apparatus for detecting proximity within a gas turbine engine comprising:
a proximity probe (202) configured to monitor proximity between engine components within areas of the gas turbine engine; and
an articulated housing (108) containing the proximity probe, wherein the articulated housing enables the proximity probe to monitor the proximity between the engine components in a 360° range about the apparatus.

2. The apparatus of claim 1, further comprising a fixed housing (104) connected to an end of the articulated housing.

3. The apparatus of claim 1 or 2, further comprising a probe head (106) connected to an end of the articulated housing.

4. The apparatus of claim 1, 2 or 3, further comprising:
an optical probe (204) configured to optically monitor the engine components; and
wherein the articulated housing further contains the optical probe and is configured to enable the optical probe to monitor the engine components in the 360° range about the apparatus.

5. The apparatus of any preceding claim, further comprising a wire connection running through the articulated housing to carry signals to/from the proximity probe.

6. The apparatus of any preceding claim, further comprising a controller (210) configured to control movement of the articulated housing throughout the 360° range about the apparatus.

7. The apparatus of any preceding claim, wherein the proximity probe further comprises an eddy current probe configured to monitor the proximity between the engine components.

8. The apparatus of any preceding claim, wherein the proximity probe further comprises a capacitive probe configured to monitor the proximity between the engine components.

9. The apparatus of any preceding claim, wherein the articulated housing is further configured to be locked into a fixed position.

10. An apparatus for detecting proximity within a gas turbine engine comprising:
a proximity probe (202) configured to monitor proximity between engine components within areas of the gas turbine engine;
an optical probe (204) configured to optically monitor the engine components; and
an articulated housing (108) containing the proximity probe and the optical probe, wherein the articulated housing enables the proximity probe to monitor the proximity between the engine components and the optical probe to optically monitor the engine components in a 360° range about the apparatus.

11. The apparatus of claim 10, further comprising a fixed housing (104) connected to a first end of the articulated housing, and, optionally, further comprising a probe head (106) connected to a second end of the articulated housing, the probe head defining an opening therein for the proximity probe and the optical probe.

12. The apparatus of claim 10 or 11, further comprising:
a first wire connection running through the articulated housing to carry signals to/from the proximity probe; and
a second wire connection running through the articulated housing to carry signals from the optical probe.

13. The apparatus of claim 10, 11 or 12, wherein:
the apparatus further comprises a controller (210) configured to control movement of the articulated housing throughout the 360° range about the apparatus; and/or
the proximity probe further comprises an eddy current probe configured to monitor the proximity between the engine components; and/or
the proximity probe further comprises a capacitive probe configured to monitor the proximity between the engine components.

14. The apparatus of claim 10, 11, 12 or 13, wherein the articulated housing is further configured to be locked into a fixed position.

15. A method for detecting proximity within a gas turbine engine comprising:
monitoring proximity between engine components within areas of the gas turbine engine using a proximity probe (202);
optically monitoring the engine components using an optical probe (204); and
articulating the proximity probe and the optical probe to a position to monitor proximity between the engine components and to optically monitor the engine components using an articulated housing (108) containing the proximity probe and the optical probe, wherein the articulated housing enables the proximity probe to monitor the proximity between the engine components and to optically monitor the engine components in a 360° range,
wherein, optionally, the method further comprises:
controlling movement of the articulated housing throughout the 360° range using a controller (210); and/or
locking the articulated housing into a fixed position to monitor proximity and optically monitor the engine components.
